# FASCICULE DE BREVET EUROPEEN

(11) **EP 3 402 707 B1**
(45) Date de publication et mention de la délivrance du brevet: **21.10.2020**
(21) Numéro de dépôt: 16826380.4
(22) Date de dépôt: 15.12.2016
(51) Int. Cl.: B60W 10/113, F16H 61/02, F16H 61/688, B60W 30/20, F16H 57/00

(54) **PROCEDE DE TRAITEMENT DU BRUIT DE GRENAILLE POUR UNE BOITE DE VITESSES A DOUBLE EMBRAYAGE**
VERFAHREN ZUR BEHANDLUNG VON SCHROTRAUSCHEN FÜR EIN DOPPELKUPPLUNGSGETRIEBE
METHOD FOR TREATING SHOT NOISE FOR A DUAL-CLUTCH TRANSMISSION

(30) Priorité: 12.01.2016 FR 1650212
(43) Date de publication de la demande: 21.11.2018
(73) Titulaire: PSA AUTOMOBILES S.A., 78300 Poissy (FR)
(72) Inventeur: BALENGHIEN, Olivier, 93340 Le Raincy (FR); AUBOIS, Valérie, 93700 Drancy (FR)
(86) Numéro de dépôt international: PCT/FR2016/053441
(87) Numéro de publication internationale: WO 2017/121932

(56) Documents cités:
- WO-A1-2013/171400
- FR-A1- 2 947 880
- FR-A1- 3 004 772

## Description

Le domaine de l'invention concerne un procédé de traitement du bruit de grenaille d'une boite de vitesses à double embrayage, également appelée boite de vitesses DCT pour « Dual Clutch Transmission » en anglais, et le dispositif de contrôle de la boite de vitesses.

L'homme du métier sait que les boites de vitesses à double embrayage comprennent deux arbres primaires et deux arbres secondaires portant respectivement les rapports de vitesse pairs et les rapports de vitesse impairs. Un rapport de vitesse est défini par un couple de pignons formé par un pignon entrainant positionné sur un des deux arbres primaires et un pignon fou positionné sur un des deux arbres secondaires lequel est piloté par un baladeur mobile en translation. Une boite de vitesses de ce type permet d'engager simultanément deux rapports de vitesse, un pair et l'autre impair, afin de procéder à un changement de rapport sous couple présentant l'avantage d'être rapide et sans rupture de couple. Un moyen de couplage à double embrayage transmettant le couple entre un moteur thermique et l'entrée de la boite de vitesses permet de coupler l'un ou l'autre arbre primaire et de coordonner le changement de rapport.

On définit le rapport de vitesse embrayé qui transmet le couple aux roues comme étant le rapport engagé, et le rapport de vitesse sélectionné mais non embrayé comme étant la présélection. La boite de vitesses à double embrayages est ainsi configurable, pour un rapport engagé, dans au moins deux positions de présélection (par exemple pour le premier et le dernier rapport) ou dans trois positions de présélection pour les rapports intermédiaires. Une position de présélection peut être un rapport montant, un rapport descendant ou une position neutre.

Il est connu que, lors de leur fonctionnement, les boites de vitesses émettent une nuisance sonore appelée bruit de grenaille résultant de l'acyclisme en couple injecté par le moteur thermique en entrée de la boite de vitesses. Le bruit de grenaille est le bruit de choc entre les dentures d'un couple de pignons fous non engagé lorsqu'ils ne sont pas plaqués complètement l'un contre l'autre. Le bruit de grenaille se caractérise par un bruit métallique pouvant devenir anxiogène pour un conducteur au point que la boite de vitesses soit invendable si le bruit est perceptible dans l'habitacle. Selon la configuration de la boite de vitesses, correspondant à un rapport engagé et à une position de présélection, celle-ci émet un bruit de grenaille plus ou moins élevé qu'il est difficile d'anticiper autrement que par la mesure empirique sur un banc de test.

Grâce à la mesure sur un banc de test, il est possible de définir un seuil d'acyclisme pour chaque configuration de la boite de vitesses, le seuil d'acyclisme correspondant à un niveau d'acyclisme injecté en entrée de la boite de vitesses au-delà duquel un critère d'audibilité du bruit de grenaille dans l'habitacle n'est plus respecté.

Une solution pour rendre imperceptible le bruit de grenaille consiste à filtrer l'acyclisme en sortie du moteur par un dimensionnement adéquat du moyen de couplage qui est en transmission entre le moteur et la boite de vitesses. Par exemple, la diminution de la rigidité de ressorts est une des solutions connues grâce à laquelle il est possible de filtrer l'acyclisme du moteur. Cependant, l'obtention d'un tel seuil de filtrage de l'acyclisme présente une contrepartie financière coûteuse pour le choix du moyen de couplage et reste limité par le couple moteur maximal à passer par ces ressorts.

De façon générale, on sait que le traitement acoustique d'une boite de vitesses est une problématique prioritaire. En outre, on connaît le brevet européen EP2085665B1 qui vise à réduire le bruit de cognement se produisant dans un embrayage à crabots lors du passage du point mort au premier rapport.

Le document de brevet WO-A-2013 171400 divulgue un dispositif de contrôle équipant un véhicule ayant un groupe motopropulseur comportant une boîte de vitesses à mécanisme de présélection de vitesse et présentant un mode fréquentiel de fonctionnement variable. Ce dispositif comprend des moyens de contrôle agencés, en cas de génération par le groupe motopropulseur d'une fréquence indésirable amplifiée par un mode fréquentiel en cours de la boîte de vitesses, pour déclencher une modification du fonctionnement du mécanisme de présélection de vitesse afin de déplacer le mode fréquentiel en cours. Ce dispositif n'est pas adapté au bruit de grenaille car centré sur un mode fréquentiel.

Le document de brevet FR-A-3 004 772 divulgue un groupe motopropulseur comprenant une boite de vitesses ayant au moins deux embrayages. Pour le traitement des acyclismes moteurs, le procédé de commande de la boite de vitesses selon l'invention permet d'exploiter l'inertie rotative de l'arbre primaire de la boite de vitesse n'ayant pas de rapport de vitesse engagé pour améliorer le filtrage des acyclismes moteur par fermeture de l'embrayage correspondant. Ce dispositif n'est pas adapté au bruit de grenaille car ne fait que rajouter une inertie en rotation, déplaçant ainsi un mode propre.

L'invention vise à améliorer plus spécifiquement le traitement du bruit de grenaille d'une boite de vitesses à double embrayage et à proposer une solution de réduction du coût de dimensionnement du moyen de couplage à double embrayage pour le filtrage de l'acyclisme injecté par le moteur. Par ailleurs, une boîte de vitesses à double embrayage est nettement plus sensible au phénomène de grenaille qu'une boîte de vitesses manuelle, pilotée ou automatique conventionnelle.

Plus précisément, l'invention concerne un procédé de traitement du bruit de grenaille d'une boite de vitesses à double embrayage pour un véhicule automobile résultant d'un acyclisme en couple injecté par un moteur thermique en entrée de la boite de vitesses, la boite de vitesses étant configurable dans au moins deux positions de présélection pour un rapport de vitesse engagé. Selon l'invention, le procédé comprend :
- une étape d'obtention, à ce rapport de vitesse engagé, pour chacune des deux positions de présélection, d'un seuil d'acyclisme au-delà duquel un critère d'audibilité du bruit de grenaille n'est pas respecté,
- une étape de mise en configuration de la boite de vitesses dans la position de présélection présentant le seuil d'acyclisme le plus élevé.

Selon une variante du procédé, l'exécution de l'étape de mise en configuration est déclenchée si le seuil d'acyclisme de la position de présélection configurée est inférieur à un seuil de filtrage de l'acyclisme d'un moyen de couplage positionné entre le moteur et l'entrée de la boite de vitesses, et de préférence, l'exécution de l'étape de mise en configuration est déclenchée si le couple du moteur thermique est supérieur à un seuil de déclenchement prédéfini correspondant au seuil d'acyclisme de la position de présélection du rapport de vitesse configurée.

Selon une variante du procédé, l'exécution de l'étape de mise en configuration est déclenchée dès qu'un rapport de vitesse à engager est en situation de transmission de couple.

Selon une variante du procédé, l'exécution de l'étape de mise en configuration est arrêtée lors du déclenchement d'une séquence de changement du rapport de vitesse engagé.

De préférence, l'étape de mise en configuration a sa durée d'exécution supérieure à la durée d'une séquence de changement de rapport de vitesse engagée.

Il est prévu selon l'invention, un dispositif de contrôle d'une boite de vitesses à double embrayage pour un véhicule automobile, la boite de vitesses étant configurable dans au moins deux positions de présélection à chaque rapport de vitesse engagé. Selon l'invention, le dispositif de contrôle comprend un module de traitement du bruit de grenaille résultant d'un acyclisme en couple injecté par un moteur thermique en entrée de la boite de vitesses, le module comprenant un premier moyen de mémorisation d'une table contenant, pour chacune des positions de présélection possibles associées à un rapport de vitesse engagé donné, un seuil d'acyclisme au-delà duquel un critère d'audibilité du bruit de grenaille n'est pas respecté, et un deuxième moyen de commande de la boite de vitesses appliquant un procédé de traitement du bruit de grenaille tel que précédemment décrit.

Selon une variante du dispositif, le premier moyen de mémorisation contient en outre un seuil de filtrage de l'acyclisme opéré par un moyen de couplage positionné entre le moteur thermique et l'entrée de la boite de vitesse.

Selon une variante du dispositif, le deuxième moyen comprend en outre un moyen pour commander la mise en configuration de la boite de vitesses en fonction du couple moteur, du seuil de filtrage de l'acyclisme et du seuil d'acyclisme de la position de présélection du rapport de vitesse configurée.

Il est également prévu selon l'invention, un véhicule automobile comprenant un dispositif de contrôle d'une boite de vitesses à double embrayage conforme à l'un quelconque des modes de réalisation du dispositif décrit précédemment.

Grâce à l'invention, il est possible de diminuer le coût de dimensionnement du moyen de couplage entre le moteur thermique et la boite de vitesses. Par ailleurs, le procédé permet de piloter judicieusement les présélections de la boite de vitesses de sorte que celle-ci émette le bruit de grenaille le plus faible.

D'autres caractéristiques et avantages de la présente invention apparaîtront plus clairement à la lecture de la description détaillée qui suit comprenant des modes de réalisation de l'invention donnés à titre d'exemples nullement limitatifs et illustrés par les dessins annexés, dans lesquels :
- la figure 1 représente un schéma simplifié d'une transmission de motorisation comprenant une boite de vitesses à double embrayage pour un véhicule automobile opérant le procédé de traitement du bruit de grenaille selon l'invention ;
- la figure 2 représente un schéma fonctionnel du dispositif de contrôle de la boite de vitesses selon l'invention ;
- la figure 3 représente un exemple d'une table, mémorisée dans une mémoire du dispositif de contrôle de la boite de vitesses, indiquant les seuils d'acyclisme de chaque configuration de la boite de vitesses;
- la figure 4 représente une séquence d'un mode de réalisation du procédé de traitement du bruit de grenaille selon l'invention.

L'invention concerne les véhicules automobiles comprenant une transmission comportant une boite de vitesses à double embrayage et un moteur thermique injectant un acyclisme en couple en entrée de la boite de vitesses. L'invention propose un procédé de traitement du bruit de grenaille de la boite de vitesses résultant de l'acyclisme moteur en configurant adéquatement une position de présélection.

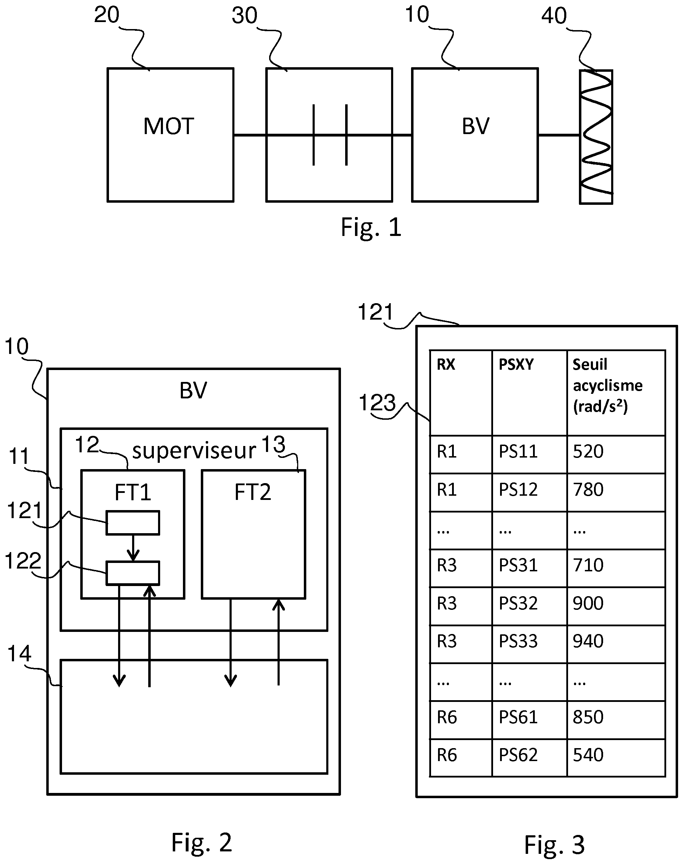

La figure 1 représente un mode de réalisation de la chaine de transmission du groupe motopropulseur d'un véhicule automobile comprenant la boite de vitesses. La chaine de transmission comprend un moteur thermique 20 dont l'arbre de sortie générant le couple moteur est couplé à un moyen de couplage à double embrayage 30. Le moyen de couplage 30 comprend deux embrayages permettant de coupler la boite de vitesses 10 à l'arbre de sortie du moteur thermique 20. L'arbre de sortie de la boite de vitesses est relié à un train de roue de traction 40.

On notera que l'acyclisme du moteur thermique 20 est une fluctuation du couple moteur, exprimée en rad/s², qui est injectée en entrée de la boite de vitesses 10. L'acyclisme est de préférence filtré par le moyen de couplage 30 à double embrayage dimensionné de sorte à présenter un seuil de filtrage de l'acyclisme déterminé. L'acyclisme généré par le moteur thermique 20 qui présente un niveau supérieur au seuil du filtrage est atténué, voire éliminé, par le moyen de couplage 30. Le filtrage a pour objectif de maintenir l'acyclisme en entrée de la boite de vitesses à un niveau inférieur à un seuil d'acyclisme de la boite de vitesse. Le seuil d'acyclisme de la boite de vitesse correspond à un niveau d'acyclisme au-delà duquel un critère d'audibilité du bruit de grenaille à l'intérieur de l'habitacle n'est pas respecté, par exemple pour un bruit atteignant un niveau supérieur à 60dBA en intérieur de l'habitacle.

En outre, le seuil d'acyclisme de la boite de vitesses varie en fonction de la configuration courante de la boite de vitesses. La configuration de la boite de vitesses est dépendante du rapport engagé, c'est-à-dire le rapport transmettant le couple aux roues, et de la position de présélection, la position de présélection pouvant être un rapport descendant, un rapport montant ou une position neutre. Généralement, le seuil d'acyclisme d'une boite de vitesses peut varier sur une plage de valeur comprise entre environ 250 rad/s² et environ 3000 rad/s². On notera que plus le seuil d'acyclisme est élevé et moins la boite de vitesse est sensible au bruit de grenaille.

Pour rappel, la boite de vitesses 10 comprend un premier et un deuxième arbres primaires concentriques l'un et l'autre portant des pignons fixes correspondant à des rapports pairs et impairs respectivement. Les pignons fixes du premier et du deuxième arbre primaire sont en contact avec des pignons fous d'un premier et d'un deuxième arbre secondaire respectivement tous deux en contact perpétuel avec un différentiel de sortie entrainant le train de roue de traction 40. Les arbres secondaires comprennent des crabots pilotables au moyen de baladeurs mobiles en translation pour engager les pignons fous avec les arbres secondaires et ainsi engager ou présélectionner les rapports de vitesse. En parallèle, le moyen de couplage 30 est piloté de façon coordonnée avec la boite de vitesses 10 pour fermer l'embrayage correspondant à l'arbre primaire du rapport à engager et ouvrir l'embrayage correspondant à l'arbre primaire du rapport présélectionné.

Par exemple, dans ce mode de réalisation, la boite de vitesses 10 possède sept rapports de vitesse permettant une pluralité de variantes de configuration. Lorsque le premier rapport est engagé, la boite de vitesses 10 peut être configurée dans une première position de présélection neutre ou une deuxième position de présélection correspondant au deuxième rapport (en vue d'un changement de rapport montant par exemple). Lorsque le deuxième rapport est engagé, elle peut être configurée dans une première position de présélection neutre, une deuxième position de présélection correspondant au premier rapport (en vue d'un changement de rapport descendant par exemple), ou une troisième position de présélection correspondant au troisième rapport (en vue d'un changement de rapport montant par exemple). Les troisième, quatrième et cinquième rapports engagés possèdent également trois positions de présélection et le sixième rapport engagé deux positions de présélections. Chacune de ces variantes de configurations de la boite de vitesses présente son propre seuil d'acyclisme. On notera qu'il est prévu dans le cadre de l'invention, dans un premier temps, de mesurer ces seuils d'acyclisme et ensuite de les mémoriser dans une table descriptive lisible lors du pilotage de la boite de vitesses.

De plus, un dispositif de contrôle (couramment appelé superviseur) de la boite de vitesses est chargé de commander les fonctions de pilotages de la boite de vitesses, notamment pour le pilotage des changements de rapport de vitesses, et, dans le cadre de l'invention, pour le traitement du bruit de grenaille de la boite de vitesses. Le dispositif de contrôle est un calculateur dédié de la boite de vitesses ou, dans une variante, peut être un calculateur central du groupe motopropulseur du véhicule automobile.

La figure 2 est un schéma simplifié représentant la boite de vitesses 10 comprenant le dispositif de contrôle 11 et les actionneurs 14 de la boite de vitesses (par exemple les actionneurs de commande des baladeurs). Le dispositif de contrôle 11 comprend notamment un module 12 pour le traitement du bruit de grenaille et un module 13 de pilotage des actionneurs 14 pour commander une séquence de changement de rapports de vitesses engagés. Les modules 12, 13 sont des modules logiciels opérés par le calculateur du dispositif de contrôle 11 émettant des commandes et requêtes de pilotage. Le calculateur est par exemple un circuit intégré à microprocesseur couplé à une mémoire apte à exécuter des fonctions logicielles de calcul.

Le module 12 comprend un premier moyen 121 de mémorisation d'une table contenant pour chacune des positions de présélection à chaque rapport de vitesse engagé, le seuil d'acyclisme en entrée de la boite de vitesses au-delà duquel un critère d'audibilité du bruit de grenaille n'est pas respecté. Ainsi, le dispositif de contrôle 11 est en capacité de connaitre le seuil d'acyclisme de toutes les configurations (rapport engagé et position de présélection) de la boite de vitesses. Le dispositif de contrôle 11 est donc apte à déterminer le seuil d'acyclisme des deux ou trois positions de présélection possibles associées à un rapport engagé donné, permettant avantageusement de configurer la boite de vitesse dans une configuration émettant le bruit de grenaille le plus faible. Le premier moyen 121 de mémorisation de la table est par exemple une mémoire lisible par le microprocesseur du dispositif de contrôle 11.

De plus, le module 12 comprend un deuxième moyen 122 pour commander une configuration de la boite de vitesses dans la position de présélection, à un rapport engagé donné, qui présente le seuil d'acyclisme le plus élevé. Le deuxième moyen 122 est apte à commander la configuration dans la position de présélection déterminée, de préférence durant le roulage du véhicule entre deux séquences de changement de rapport de vitesses engagé, dès que le rapport à engager est en transmission de couple.

Dans une autre variante, le deuxième moyen 122 est apte à commander la configuration dans la position de présélection déterminée si une condition de déclenchement est active. Par exemple, la condition de déclenchement peut être fonction de la valeur du couple moteur en sortie du moteur thermique au regard d'un seuil de déclenchement prédéfini. En effet, il est connu que l'acyclisme d'un moteur thermique est proportionnel à son couple moteur. Le seuil de déclenchement prédéfini est calculé en fonction du seuil d'acyclisme de la configuration courante de la boite de vitesse 10, du seuil de filtrage du moyen de couplage 30 et du couple moteur maximum du moteur thermique 20. Le calcul du seuil de déclenchement en couple est décrit plus précisément dans la suite de la description.

On notera que le deuxième moyen de commande 122 est par exemple une fonction logicielle ou une logique de contrôle pilotant les actionneurs et est apte à recevoir des paramètres de pilotage issus d'un superviseur central et des composants internes de la boite de vitesses (par exemple le couple et le régime du moteur thermique 20, la position de présélection qui est configurée, et les paramètres du moyen de couplage 30) et à exécuter des calculs en vue d'élaborer une commande de configuration de la boite de vitesses 10.

On notera que le premier moyen de mémorisation 121 peut contenir également le seuil de filtrage de l'acyclisme opéré par le moyen de couplage 30.

Par ailleurs, le dispositif de contrôle 11 comprend le module 13 de commande d'une séquence de changement de rapport engagé. Ce module est en charge de synchroniser les présélections et le moyen de couplage 30. Une séquence de changement de rapport de vitesse engagé est d'une durée généralement inférieure à une seconde ce qui n'est pas suffisant pour l'apparition d'un bruit de grenaille. On notera qu'une commande de changement de rapport de vitesse engagé implique une ouverture d'un premier embrayage et une fermeture du deuxième embrayage et la présélection du rapport montant ou descendant du rapport à engager.

Quant au module 12, à la différence du module 13, il commande la position de présélection ayant le seuil d'acyclisme le plus élevé mais n'implique pas l'ouverture ou fermeture d'un embrayage. De plus, une commande issue du module 13 est prioritaire à une commande issue du module 12.

La figure 3 est une représentation de la table 123 mémorisée dans le moyen 121 pour un modèle déterminé de boite de vitesses. La table représentée en figure 3 n'est en aucun cas limitative de l'invention. La table contient, pour chacune des positions de présélection associées à chaque rapport de vitesse engagé, le seuil d'acyclisme en entrée de la boite de vitesses au-delà duquel un critère d'audibilité du bruit de grenaille n'est pas respecté. La première colonne Rx contient les rapports de vitesses engagés, la deuxième colonne PSXY contient les positions de présélections possibles pour chaque rapport de vitesse engagé, et la troisième colonne le seuil d'acyclisme correspondant à chaque configuration. Seules les configurations correspondantes au premier, troisième et sixième rapport de vitesses sont représentées car elles présentent les seuils d'acyclisme les plus faibles. Le premier et le sixième rapport possèdent deux positions de présélections et le deuxième, le troisième, le quatrième et le cinquième rapport possèdent trois positions de présélection.

Pour ce modèle de boite de vitesses il est envisageable que le dimensionnement du seuil de filtrage du moyen de couplage 30 soit choisi pour être équivalent à 780 rad/s², correspondant au seuil d'acyclisme de la deuxième position de présélection associée au premier rapport engagé. On choisit ce dimensionnement car il permet de réduire le coût du moyen de couplage 30 par rapport à un seuil de 520 rad/s². Ce dimensionnement est possible car le procédé de l'invention est piloté pour commander les configurations ayant le seuil d'acyclisme le plus élevé. Par conséquent, le procédé empêche avantageusement les configurations de la boite de vitesses ayant un seuil d'acyclisme inférieur au seuil de filtrage choisi et ainsi les situations d'apparition du bruit de grenaille. Dans ce cas-ci, les configurations empêchées sont la première position de présélection PS11 associée au premier rapport R1 ayant un seuil d'acyclisme de 520 rad/s², la première position de présélection PS31 associée au troisième rapport R3 ayant un seuil d'acyclisme de 710 rad/s² et la deuxième présélection PS62 associée au sixième rapport R6 ayant un seuil d'acyclisme de 540 rad/s².

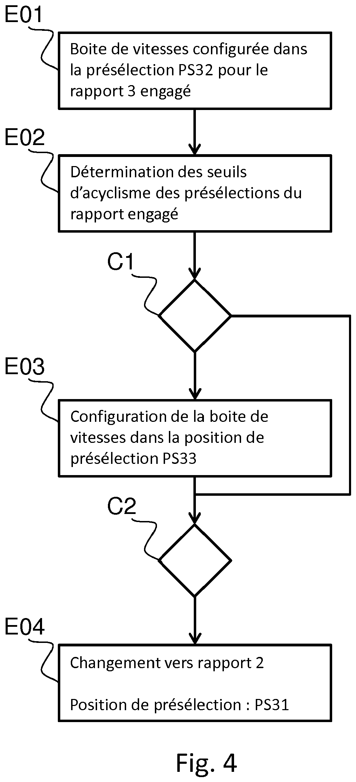

Plus précisément, la figure 4 représente un mode de réalisation du procédé de traitement du bruit de grenaille d'une boite de vitesse à double embrayage selon l'invention. Le procédé est piloté par le dispositif de contrôle 11 de la boite de vitesse 10 lors du roulage du véhicule.

Dans la situation de roulage décrite, le véhicule automobile est en situation de roulage correspondant à l'étape E01, et la boite de vitesses 10 est configurée dans une première position de présélection pour un rapport RX engagé. Par exemple, l'étape E01 est une phase de roulage pour laquelle la boite de vitesses est configurée avec le troisième rapport R3 engagé et la position de présélection PS32 correspondant à une présélection neutre. Il s'agit par exemple d'une étape intervenant immédiatement à la suite d'une séquence de changement de rapport de vitesses engagé vers le troisième rapport. Bien entendu d'autres configurations sont possibles pour l'étape initiale E01, en particulier le procédé selon l'invention est exécutable pour tous les rapports de vitesse de la boite de vitesses 10.

Ensuite, le procédé comprend une étape d'obtention E02, pour chacune des positions de présélection associées au rapport engagé, d'un seuil d'acyclisme au-delà duquel un critère d'audibilité du bruit de grenaille n'est pas respecté. L'étape d'obtention E02 s'effectue pour deux ou trois positions de présélection selon le rapport engagé. Dans ce cas-ci, il s'agit des trois positions de présélections PS31, PS32 et PS33. La détermination correspond à une lecture ou une requête d'obtention d'informations dans la mémoire 121 du module 12 du dispositif de contrôle 11 où est mémorisée la table 123 des seuils d'acyclisme. Il est déterminé que la première position de présélection PS32 possède un seuil d'acyclisme de 900 rad/s², une deuxième position de présélection PS31 (le rapport descendant) possède un seuil de 710 rad/s², une troisième position de présélection PS33 (le rapport montant) possède un seuil d'acyclisme de 940 rad/s². Dans une autre situation, par exemple pour le sixième rapport R6 lorsqu'il est engagé, l'étape d'obtention E02 est opérée pour deux positions de présélections PS61 et PS62.

Ensuite, selon une première variante, le procédé comprend une étape E03 de configuration de la boite de vitesses 10 dans la position de présélection présentant le seuil d'acyclisme le plus élevé. Dans cette variante, une condition de déclenchement C1 de l'étape de mise en configuration E03 est active dès que le rapport de vitesse à engager est en situation de transmission de couple. Ainsi, la boite de vitesse 10 est avantageusement configurée dans la position la moins sensible au bruit de grenaille, c'est-à-dire la configuration qui émet le moins de bruit de grenaille, parmi les deux ou trois positions de présélection associées au rapport engagé. L'étape de mise en configuration E03 prévoit donc une commande de changement de position de présélection, dans cet exemple de la position de présélection PS32 (présélection neutre) vers la position de présélection PS33 (quatrième rapport).

On notera que l'étape de mise en configuration E03 est maintenue jusqu'à ce qu'une condition d'arrêt C2 soit active, par exemple le déclenchement d'une séquence de changement de rapport de vitesse engagé par le module 13, changement descendant vers le deuxième rapport R2 impliquant la présélection PS31. De plus, la durée de l'étape de mise en configuration E03 peut être de quelques secondes à plusieurs minutes selon les conditions de la phase de roulage. Par exemple, l'étape de mise en configuration E03 peut être maintenue plusieurs minutes si le véhicule circule à une vitesse de croisière.

Ensuite, l'étape E04 est une séquence de changement de rapport de vitesse, par exemple vers le deuxième rapport R2. La séquence de changement de rapport de vitesse E04 implique la présélection du rapport descendant PS31 correspondant au deuxième rapport, puis un embrayage de l'arbre primaire du rapport descendant PS31 et un débrayage de l'arbre primaire du rapport engagé R3, puis une modification de présélection du troisième rapport R3 vers une position neutre. Généralement, la séquence est d'une durée inférieure à une seconde et ne permet pas l'instauration du bruit de grenaille, même si les conditions de régime moteur et du seuil d'acyclisme de la position de présélection PS31 sont réunies.

Dans une deuxième variante du procédé, la condition de déclenchement C1 est définie de sorte que l'exécution de l'étape de mise en configuration E03 est déclenchée si le seuil d'acyclisme de la position de présélection configurée est inférieur au seuil de filtrage de l'acyclisme du moyen de couplage 30. Dans notre exemple, la position de présélection PS32 présente un seuil d'acyclisme de 900 rad/s², supérieur au seuil de filtrage du moyen de couplage 30 dimensionné à 780 rad/s². Il n'est alors pas nécessaire de configurer la boite de vitesses à une configuration de seuil d'acyclisme supérieur car le moyen de couplage est en capacité de filtrer par lui-même les acyclismes du moteur thermique 20. La boite de vitesse 10 reste configurée dans la configuration de l'étape E01 jusqu'à ce que la condition d'arrêt C2 soit active, par exemple pour une séquence de changement de rapport engagé.

Par contre, dans une autre situation, si la position de présélection de l'étape E01 est caractérisée par un seuil d'acyclisme inférieur au seuil de filtrage du moyen de couplage 30, alors la condition de déclenchement C1 est active et entraine le passage à l'étape de mise en configuration E03. Par exemple si la position de présélection est la position PS31 dont le seuil d'acyclisme est égal à 710 rad/s². Cette condition de déclenchement C1 dans la deuxième variante du procédé permet de modifier la configuration de la boite de vitesse seulement lorsque la configuration courante est susceptible d'émettre un bruit de grenaille, par exemple lorsque le couple moteur est supérieur au niveau de sensibilité de la configuration courante. On évite ainsi les changements de présélection inutiles.

Dans une troisième variante du procédé, la condition de déclenchement C1 est définie de sorte que l'exécution de l'étape de mise en configuration E03 est déclenchée si le seuil d'acyclisme de la position de présélection configurée est inférieur à un seuil de filtrage de l'acyclisme du moyen de couplage 30, et si le couple du moteur est supérieur à un seuil de déclenchement prédéfini correspondant au seuil d'acyclisme de la position de présélection. L'acyclisme est proportionnel au couple moteur, il est donc possible de déterminer le seuil de déclenchement prédéfini du couple moteur qui correspond au seuil d'acyclisme.

Plus précisément, dans cette troisième variante le seuil de déclenchement prédéfini du couple moteur en sortie du moteur thermique 20, pour la position de présélection configurée, est égal à Cd =Cmaxmot* Sxmin/Smin, avec Cd pour le seuil de déclenchement du couple moteur, Cmaxmot égal au couple moteur maximal du moteur thermique 20, Sxmin égal au seuil d'acyclisme de la position de présélection associée au rapport X engagé et Smin égal au seuil de filtrage du moyen de couplage 30.

Cette troisième variante permet de déclencher la configuration E03 uniquement lorsque le couple moteur dépasse le seuil d'acyclisme de la position de présélection. Par exemple, si la position de présélection de l'étape E01 est PS31 avec le troisième rapport R3 engagé, le seuil de déclenchement est égal à 710/780 *Cmaxmot, soit 91% du couple moteur maximum. Si la position de présélection de l'étape E01 est PS11 avec le premier rapport R1 engagé, le seuil de déclenchement est égal à 520/780 *Cmaxmot, soit 66% du couple moteur maximum. Si la position de présélection de l'étape E01 est PS62 avec le sixième rapport engagé R6, le seuil de déclenchement est égal à 540/780 *Cmaxmot, soit 69% du couple moteur maximum.

On notera que le seuil de déclenchement prédéfini pour chaque configuration de la boite de vitesse peut être mémorisé dans le moyen de mémorisation 121 du module 12.

En outre, pour la deuxième et la troisième variante du procédé, on notera que l'étape de mise en configuration E03 est maintenue jusqu'à ce qu'une condition d'arrêt C2 soit active, à l'instar de la première variante du procédé. La condition d'arrêt C2 peut être le déclenchement d'une séquence de changement de rapport de vitesse engagée ou la fin de la condition de déclenchement C1. Comme pour la première variante, l'étape de mise en configuration E03 prévoit également une commande de changement de position de présélection.

On remarquera que, quelle que soit la variante du procédé, durant toute l'exécution de l'étape de mise en configuration E03, l'embrayage correspondant au rapport présélectionné est ouvert.

Le procédé de traitement du bruit de grenaille s'applique pour les véhicules comprenant une boite de vitesses à double embrayage et pilote les présélections pour diminuer le bruit de grenaille émis par la boite de vitesse. Le procédé s'applique à tout type de véhicule automobile à moteur thermique ayant un dispositif de contrôle de la boite de vitesses du type précité.

## Revendications

1. Procédé de traitement du bruit de grenaille d'une boite de vitesses (10) à double embrayage (30) pour un véhicule automobile résultant d'un acyclisme en couple injecté par un moteur thermique (20) en entrée de la boite de vitesses, la boite de vitesses (10) étant configurable dans au moins deux positions de présélection (PSXX) pour un rapport de vitesse engagé (RX), le procédé étant **caractérisé en ce qu'**il comprend :
- une étape d'obtention (E02), à ce rapport de vitesse engagé (RX), pour chacune des deux positions de présélection (PSXX), d'un seuil d'acyclisme au-delà duquel un critère d'audibilité du bruit de grenaille n'est pas respecté,
- une étape de mise en configuration (E03) de la boite de vitesses (10) dans la position de présélection du rapport de vitesse présentant le seuil d'acyclisme le plus élevé.

2. Procédé selon la revendication 1, **caractérisé en ce que** l'exécution de l'étape de mise en configuration (E03) est déclenchée si le seuil d'acyclisme de la position de présélection configurée est inférieur à un seuil de filtrage de l'acyclisme d'un moyen de couplage (30) positionné entre le moteur (20) et l'entrée de la boite de vitesses (10).

3. Procédé selon la revendication 2, **caractérisé en ce que** l'exécution de l'étape de mise en configuration (E03) est déclenchée si le couple du moteur thermique est supérieur à un seuil de déclenchement (Cd) prédéfini correspondant au seuil d'acyclisme de la position de présélection du rapport de vitesse configurée.

4. Procédé selon la revendication 1, **caractérisé en ce que** l'exécution de l'étape de mise en configuration (E03) est déclenchée dès qu'un rapport de vitesse à engager est en situation de transmission de couple.

5. Procédé selon l'une quelconque des revendications 1 à 4, **caractérisé en ce que** l'exécution de l'étape de mise en configuration (E03) est arrêtée lors du déclenchement d'une séquence de changement du rapport de vitesse engagé.

6. Dispositif de contrôle (11) d'une boite de vitesses (10) à double embrayage (30) pour un véhicule automobile, la boite de vitesses (10) étant configurable dans au moins deux positions de présélection à chaque rapport de vitesse engagé, **caractérisé en ce qu'**il comprend un module (12) de traitement du bruit de grenaille résultant d'un acyclisme en couple injecté par un moteur thermique (20) en entrée de la boite de vitesses (10), le module (12) comprenant un premier moyen (121) de mémorisation d'une table contenant, pour chacune des positions de présélection possibles associées à un rapport de vitesse engagé donné, un seuil d'acyclisme au-delà duquel un critère d'audibilité du bruit de grenaille n'est pas respecté, et un deuxième moyen (122) de commande de la boite de vitesses appliquant un procédé de traitement du bruit de grenaille selon l'une des revendications 1 à 5 .

7. Dispositif de contrôle (11) selon la revendication 6, **caractérisé en ce que** le premier moyen de mémorisation (121) contient en outre un seuil de filtrage de l'acyclisme opéré par un moyen de couplage (30) positionné entre le moteur thermique (20) et l'entrée de la boite de vitesse (10).

8. Dispositif de contrôle (11) selon la revendication 7, **caractérisé en ce que** le deuxième moyen (122) comprend en outre un moyen pour commander la mise en configuration de la boite de vitesses en fonction du couple moteur, du seuil de filtrage de l'acyclisme et du seuil d'acyclisme de la position de présélection du rapport de vitesse configurée.

9. Véhicule automobile comprenant un dispositif de contrôle (11) d'une boite de vitesses (10) à double embrayage conforme à l'une quelconque des revendications 6 à 8.

## Patentansprüche

1. Verfahren zum Verarbeiten des Schussgeräuschs eines Getriebes (10) mit Doppelkupplung (30) für ein Kraftfahrzeug, das sich aus einem von einer Wärmekraftmaschine (20) am Eingang des Getriebes eingespeisten Drehmoment ergibt Das Getriebe (10) ist in mindestens zwei Vorauswahlpositionen (PSXX) für ein eingelegtes Übersetzungsverhältnis (RX) konfigurierbar, wobei das Verfahren **dadurch gekennzeichnet ist, dass** es umfasst:
- einen Schritt zum Erhalten (E02) bei diesem Übersetzungsverhältnis (RX) für jede der beiden Vorauswahlpositionen (PSXX) eine Azyklismusschwelle, ab der ein Geräuschhörbarkeitskriterium von Schuss wird nicht respektiert,
- ein Schritt zum Konfigurieren (E03) des Getriebes (10) in der Übersetzungsvorwahlposition mit der höchsten azyklischen Schwelle.

2. Verfahren nach Anspruch 1, **dadurch gekennzeichnet, dass** die Ausführung des Konfigurationsschritts (E03) ausgelöst wird, wenn die Azyklismusschwelle der konfigurierten Vorauswahlposition kleiner als eine Azyklismusfilterschwelle d ist ein Kupplungsmittel (30), das zwischen dem Motor (20) und dem Eingang des Getriebes (10) angeordnet ist.

3. Verfahren nach Anspruch 2, **dadurch gekennzeichnet, dass** die Ausführung des Konfigurationsschritts (E03) ausgelöst wird, wenn das Drehmoment der Wärmekraftmaschine größer als eine vordefinierte Auslöseschwelle (Cd) ist, die der Azyklismusschwelle von entspricht die voreingestellte Position des konfigurierten Übersetzungsverhältnisses.

4. Verfahren nach Anspruch 1, **dadurch gekennzeichnet, dass** die Ausführung des Konfigurationsschritts (E03) ausgelöst wird, sobald sich ein einzurückendes Übersetzungsverhältnis in einer Drehmomentübertragungssituation befindet.

5. Verfahren nach einem der Ansprüche 1 bis 4, das **dadurch gekennzeichnet ist, dass** die Ausführung des Konfigurationsschritts (E03) gestoppt wird, wenn eine Sequenz zum Ändern des eingelegten Übersetzungsverhältnisses ausgelöst wird.

6. Vorrichtung (11) zum Steuern eines Getriebes (10) mit Doppelkupplung (30) für ein Kraftfahrzeug, wobei das Getriebe (10) in mindestens zwei Vorwahlpositionen bei jedem eingelegten Übersetzungsverhältnis konfigurierbar ist, charakterisiert, dass es ein Modul (12) zum Verarbeiten des Schussgeräuschs umfasst, das aus einem Drehmoment-Azyklismus resultiert, der von einer Wärmekraftmaschine (20) am Eingang des Getriebes (10) eingespritzt wird, wobei das Modul (12) a umfasst erste Mittel (121) zum Speichern einer Tabelle, die für jede der möglichen Vorauswahlpositionen, die mit einem gegebenen eingelegten Übersetzungsverhältnis verbunden sind, eine Azyklismusschwelle enthält, ab der ein Kriterium der Hörbarkeit des Schussgeräuschs nicht mehr besteht nicht eingehalten, und ein zweites Mittel (122) zum Steuern des Getriebes unter Anwendung eines Schussgeräuschverarbeitungsverfahrens gemäß einem der Ansprüche 1 bis 5.

7. Steuervorrichtung (11) nach Anspruch 6, die **dadurch gekennzeichnet ist, dass** das erste Speichermittel (121) ferner eine Azyklismusfilterschwelle enthält, die von einem Kopplungsmittel (30) betrieben wird, das zwischen der Wärmekraftmaschine (20) angeordnet ist und den Eingang des Getriebes (10).

8. Steuervorrichtung (11) nach Anspruch 7, **dadurch gekennzeichnet, dass** das zweite Mittel (122) ferner Mittel zum Steuern der Konfiguration des Getriebes als Funktion des Motordrehmoments, der Filterschwelle des acycling und die azyklische Schwelle der voreingestellten Übersetzungsverhältnisposition.

9. Kraftfahrzeug mit einer Steuervorrichtung (11) eines Doppelkupplungsgetriebes (10) nach einem der Ansprüche 6 bis 8.

## Claims

1. Process for processing the shot-noise of a gearbox (10) with dual clutch (30) for a motor vehicle resulting from a torque cyclic irregularity injected by a heat engine (20) at the input of the gearbox, the gearbox (10) being configurable in at least two preselection positions (PSXX) for an engaged gear ratio (RX), the method being **characterized in that** it comprises:
- a step of obtaining (E02), at this gear ratio engaged (RX), for each of the two preselection positions (PSXX), an cyclic irregularity threshold beyond which a noise audibility criterion of shot-noise is not respected,
- a step of configuring (E03) the gearbox (10) in the position of preselection of the gear ratio having the highest acyclic threshold.

2. Method according to Claim 1, **characterized in that** the execution of the configuration step (E03) is triggered if the cyclic irregularity threshold of the configured preselection position is less than a cyclic irregularity filtering threshold of a coupling means (30) positioned between the motor (20) and the input of the gearbox (10).

3. Method according to Claim 2, **characterized in that** the execution of the configuration step (E03) is triggered if the torque of the heat engine is greater than a predefined trigger threshold (Cd) corresponding to the cyclic irregularity threshold of the preset position of the configured gear ratio.

4. Method according to Claim 1, **characterized in that** the execution of the configuration step (E03) is triggered as soon as a gear ratio to be engaged is in a torque transmission situation.

5. Method according to any one of claims 1 to 4, **characterized in that** the execution of the configuration step (E03) is stopped when triggering a sequence of changing the gear ratio engaged.

6. Device (11) for controlling a gearbox (10) with dual clutch (30) for a motor vehicle, the gearbox (10) being configurable in at least two preselection positions at each gear ratio engaged, **characterized in that** it comprises a module (12) for processing shot-noise resulting from cyclic irregularity in torque injected by a heat engine (20) at the input of the gearbox (10), the module (12) comprising a first means (121) for storing a table containing, for each of the possible preselection positions associated with a given engaged gear ratio, an cyclic irregularity threshold beyond which a criterion of audibility of the shot-noise is not not respected, and a second means (122) for controlling the gearbox applying a shot-noise processing method according to one of claims 1 to 5.

7. Control device (11) according to claim 6, **characterized in that** the first storage means (121) further contains an cyclic irregularity filtering threshold operated by a coupling means (30) positioned between the heat engine (20) and the input of the gearbox (10).

8. Control device (11) according to claim 7, **characterized in that** the second means (122) further comprises means for controlling the setting of the gearbox as a function of the engine torque, of the filtering threshold of the cyclic irregularity and the cyclic irregularity threshold of the configured gear ratio preset position.

9. Motor vehicle comprising a control device (11) of a dual clutch gearbox (10) according to any one of claims 6 to 8.
